(19) **Europäisches Patentamt / European Patent Office / Office européen des brevets**

(11) **EP 1 214 608 B1**

(12) **FASCICULE DE BREVET EUROPEEN**

(45) Date de publication et mention de la délivrance du brevet:
**07.05.2008 Bulletin 2008/19**

(21) Numéro de dépôt: **99942995.4**

(22) Date de dépôt: **17.09.1999**

(51) Int Cl.:
*G01S 13/00* (2006.01)    *H04L 27/26* (2006.01)

(86) Numéro de dépôt international:
**PCT/FR1999/002216**

(87) Numéro de publication internationale:
**WO 2001/022117 (29.03.2001 Gazette 2001/13)**

(54) **SYSTEME DE DETECTION DE MOBILES, UTILISANT LES EMISSIONS DE TELEDIFFUSION NUMERIQUE D'UN RESEAU D'EMETTEURS TERRESTRES**

**ANORDNUNG ZUR ERKENNUNG VON MOBILEN DIE DIE SENDUNGEN EINES DIGITALEN RUNDFUNKS EINES NETZES IRDISCHEN SENDERS VERWENDET**

**SYSTEM FOR DETECTING MOBILE RECEIVERS, USING DIGITAL TELEBROADCASTS TRANSMISSION OF A GROUND TRANSMITTER NETWORK**

(84) Etats contractants désignés:
**AT BE CH CY DE DK ES FI FR GB GR IE IT LI LU MC NL PT SE**

(43) Date de publication de la demande:
**19.06.2002 Bulletin 2002/25**

(73) Titulaires:
• **Thales**
  **75008 Paris (FR)**
• **OFFICE NATIONAL D'ETUDES ET DE RECHERCHES AEROSPATIALES (ONERA)**
  **92320 Chatillon sous Bagneux (FR)**

(72) Inventeurs:
• **THOUVENEL, Gérard**
  **Thomson-CSF DPI Brevets**
  **94117 Arcueil Cedex (FR)**
• **LESTURGIE, Marc,**
  **Thomson-CSF DPI Brevets**
  **94117 Arcueil Cedex (FR)**
• **POULLIN, Dominique,**
  **Thomson-CSF DPI Brevets**
  **94117 Arcueil Cedex (FR)**

(74) Mandataire: **Lucas, Laurent Jacques et al**
  **Marks & Clerk France**
  **31-33 Avenue Aristide Briand**
  **94117 Arcueil Cedex (FR)**

(56) Documents cités:
  **EP-A- 0 681 190**

• **B. CARRARA, P. TOURTIER, M. PECOT: "The MUTE radar (Multistatic using television emitters radar)" INTERNATIONAL CONFERENCE ON RADAR, 3 - 6 mai 1994, pages 426-431, XP002107492 Paris, France cité dans la demande**
• **H. D. GRIFFITHS, N. R. W. LONG: "Television-based bistatic radar" IEE PROC. COMMUN. RADAR SIGNAL PROCESS. (UK), vol. 133, no. 7, décembre 1986 (1986-12), pages 649-657, XP002107493**

## Description

L'invention concerne la détection, la localisation et la détermination de la vitesse de mobiles au voisinage du sol par un système radar bi-statique.

Le document "Multimode multistatics for passive/active airborne surveillance, Robert F. Ogrodnik, Rome Air Development Center, Griffiss AFB NY 13441-5700, CP381 (Supp) présente l'utilisation d'émissions de télédiffusion publiques existantes comme signaux d'émissions d'un radar bi-statique, qui bénéficie ainsi d'une couverture géographique étendue et d'une discrétion absolue. Les fonctions de détection, localisation et détermination de la vitesse sont réalisées en mettant en oeuvre un réseau distinct de récepteurs, couvrant la zone d'observation, associé à un traitement centralisé des informations provenant de la rétrodiffusion des signaux par un mobile.

Il est possible d'évaluer les performances d'un tel concept en appliquant les lois générales du radar aux caractéristiques actuelles des émissions analogiques de télédiffusion. Ainsi, la présence de la synchronisation ligne dans les signaux télédiffusés conduit à une pluralité de solutions pour la mesure de distance; de même, la précision de cette mesure, inversement proportionnelle à la bande passante utile des signaux d'émission, ne peut être que médiocre.

L'avènement de la télévision numérique a amené à repenser totalement la nature des signaux d'émission, conduisant à la définition d'une norme COFDM (Coded Orthogonal Frequency Division Multiplex), présentant de nombreux avantages techniques, suppression des échos perturbateurs par exemple, et commerciaux, nombre élevé de programmes accessibles.

La présente invention vise à exploiter, dans le domaine des radars, de tels signaux numériques.

A cet effet, elle utilise des émissions terrestres de télédiffusion, qui opèrent communément sur la base d'une pluralité de porteuses de fréquences fixées, affectées d'une modulation numérique par symboles, traitée en multiplexage fréquentiel, orthogonal d'une porteuse à l'autre.

On peut considérer comme connu ("Le radar muet", B. CARRARA, P. TOURTIER, M. PECOT; Colloque Radar 1994, Palais des Congrès, Paris) un récepteur de détection d'objets mobiles, utilisant de tels émetteurs hertziens et comprenant:

- des moyens de réception radioélectrique, pour capter les signaux rétro-diffusés par des objets sous l'effet desdits émetteurs hertziens,
- des moyens de traitement pour effectuer une discrimination de tels objets, en principe selon des cases distance/ Doppler, et
- des moyens auxiliaires pour l'acquisition d'une référence de synchronisation par rapport aux émetteurs, afin de caler ces cases distance/Doppler dans le temps.

Le document EP0681190A1 décrit un système radar utilisant un réseau de télévision numérique pour réaliser une configuration multistatique. L'invention propose un récepteur, caractérisé
en ce qu'il comprend des moyens (auxiliaires) pour recevoir et démoduler le signal direct hertzien de télédiffusion reçu de l'un au moins des émetteurs, afin d'en déterminer les instants de synchronisation et les symboles,
et en ce que les moyens de traitement comprennent:

- des moyens de distribution Doppler, propres à répartir les signaux reçus selon une pluralité de voies Doppler, en leur affectant dans chaque voie un décalage de fréquence associé au rang de cette voie Doppler,
- des moyens de compression en distance, propres à faire la somme, pour toutes les porteuses, des corrélations, sous des formes homologues, de la sortie de chaque voie Doppler avec les symboles disponibles en sortie des moyens auxiliaires, ce qui fournit des échantillons arrangés en cases distance/Doppler,
- des moyens d'intégration Doppler cohérente sur un temps choisi, ce qui fournit des cases distance/Doppler intégrées, et
- des moyens de post-traitement avec poursuite, agencés pour rapprocher les échos obtenus dans ces cases, afin d'obtenir des plots radar contenant des informations de position/vitesse sur un ou des objets.

De préférence, le récepteur comporte, en sortie de son étage de réception radio-électrique, un convertisseur analogique/numérique, suivi d'un étage à transformée de HILBERT, pour obtenir des signaux numériques complexes amplitude/phase. Les moyens de distribution Doppler et les étages suivants opèrent en numérique.

Très avantageusement, les moyens de compression en distance comprennent des étages de transformation de Fourier sur des trains de données temporelles glissantes issues de la distribution Doppler, ce qui régénère les symboles tels que reçus, puis des corrélateurs temporels de ceux-ci avec la sortie des moyens auxiliaires, et un sommateur de la sortie des corrélateurs pour l'ensemble des porteuses.

Il est actuellement préféré que les moyens de réception radioélectrique comprennent une antenne-réseau, et que les moyens de traitement opèrent sélectivement sur des voies respectivement associées à des éléments d'antenne ou groupes d'éléments d'antenne distincts, jusqu'aux moyens de post-traitement, qui comprennent en tête des moyens de recombinaison des sorties de ces voies, en vue d'une formation de faisceaux. De préférence, les moyens de recombinaison de faisceau opèrent de façon adaptative, en fonction des mobiles poursuivis et des échos observés.

Selon un autre aspect de l'invention, les moyens de post-traitement comprennent un étage de traitement multi-statique, pour définir chaque plot radar à partir de plusieurs couples émetteur-récepteur.

L'invention prévoit aussi un système de détection d'objets mobiles, qui comprend plusieurs récepteurs, placés en des endroits choisis, et des moyens pour rapprocher les plots radar que fournissent ces récepteurs.

Selon un complément intéressant, en plus des émetteurs de télédiffusion proprement dits, le système comprend des émetteurs additionnels placés en des endroits choisis et opérant avec la même modulation que les émetteurs de télédiffusion proprement dits.

Une autre variante consiste à ajouter au système des moyens pour adresser aux émetteurs de télédiffusion des informations de service, aux fins de re-transmission dans leur modulation.

D'autres caractéristiques et avantages de l'invention apparaîtront à l'examen de la description détaillée ci-après, et des dessins annexés, sur lesquels:

-    la figure 1 est un diagramme temporel illustrant le mode de codage des signaux COFDM,

-    la figure 2 est un schéma illustrant une détection de position bi-statique à partir de trois émetteurs, illustrés ici aux sommets d'un triangle sensiblement équilatéral,

-    la figure 3 est l'illustration très schématique d'un aérien utilisable dans un récepteur selon l'invention,

-    la figure 4 est le schéma détaillé d'un récepteur utilisable pour la mise en oeuvre de l'invention,

-    la figure 5 est le schéma plus détaillé de l'étage 40 de la figure 4,

-    la figure 6 est le schéma plus détaillé de l'étage 50 de la figure 4,

-    la figure 7 est un diagramme montrant la multiplicité des signaux traités à chaque stade, et

-    la figure 8 est un groupe de diagrammes temporels montrant un exemple de répartition de signaux reçus.

Les dessins annexés comprennent des éléments de caractère certain. Ils sont donc à considérer comme incorporés à la description, et pourront non seulement servir à mieux faire comprendre celle-ci, mais aussi contribuer à la définition de l'invention.

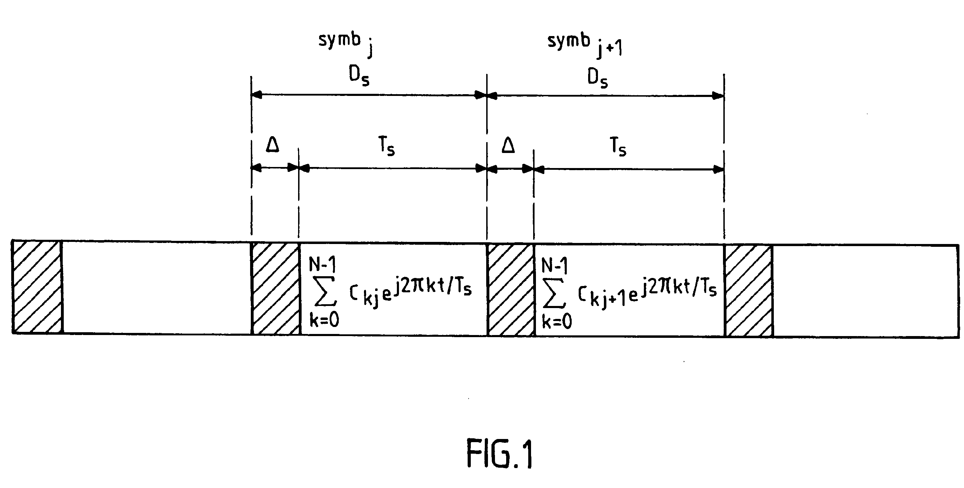

En référence à la figure 1, on présentera tout d'abord la modulation COFDM. Elle est décrite notamment dans l'article "Digital Sound Broadcasting to Mobile Receivers", B. LE FLOCH, R. HALBERT-LASSALLE, D. CASTELAIN, IEEE Transactions on Consumer Electronics, Vol. 35, N° 3, August 1989.

Il est prévu que la télédiffusion en numérique se fasse selon ce type de modulation, en particulier pour la télévision. Cela implique d'utiliser un maillage adéquat d'émetteurs terrestres, couvrant tout le territoire de diffusion, ou presque.

La modulation COFDM utilise un grand nombre (typiquement plusieurs milliers) de sous-porteuses équidistantes (on dira ici porteuses, pour simplifier). Celles-ci sont modulées à basse fréquence, de manière indépendante, par des codes adéquats, qui selon l'application peuvent être notamment un codage par décalage de phase à Q moments (Q Phase Shift Keying ou QPSK) ou encore un codage en modulation d'amplitude à Q moments (Q Amplitude Modulation ou QAM).

L'élément de base de la modulation est le "symbole".

A la réception, on procède par un produit scalaire, auquel on applique une intégration de durée rigoureusement égale à l'inverse du pas de fréquence des porteuses. Il en découle l'orthogonalité des porteuses à la réception, ce qui permet de récupérer sans diaphonie les symboles.

La durée d'un symbole est sensiblement plus longue que l'inverse du pas de la fréquence des porteuses. La différence entre ces deux temps définit un "intervalle de garde", qui précède l'opération produit scalaire intégré. Il permet de s'affranchir de la dispersion de temps de propagation qui peut résulter de trajets multiples.

Une particularité de cette modulation est de permettre l'émission synchronisée simultanée de plusieurs émetteurs spatialement distincts, pourvu que leurs signaux parviennent aux récepteurs dans l'intervalle de garde. Cette propriété est fondamentale pour l'invention présente: elle rend possible la couverture d'une zone géographique par un réseau monofréquence (mono-bande), contrairement aux émissions de télévision analogiques actuelles, par exemple.

Il convient maintenant de décrire succinctement un exemple de signaux COFDM.

On considère une série de symboles numériques à transmettre SYMB$_j$ (t), où t est le temps, et j l'indice d'un symbole. L'expression du signal à transmettre est alors donnée par l'équation (1) de l'Annexe de Formules (reportée en fin de description).

L'expression d'un symbole est donnée par l'équation (2). Celle-ci fait appel:

- à une fonction Ψ définie par l'équation (3), qui fait elle-même appel à l'équation (4), où f$_k$ désigne la fréquence de la porteuse de rang k, et
- à des coefficients C$_{j,k}$ qui peuvent prendre l'une des quatre valeurs définies par la relation (5), où i est le symbole usuel des imaginaires complexes (dans le cas particulier d'une modulation 4PSK, à Q=4 moments).

Dans ces relations, D$_s$ et T$_s$ sont respectivement la durée totale et la durée utile d'émission d'un symbole, comme on le verra plus loin. Δ=D$_s$-T$_s$ est l'intervalle de garde.

Pour une valeur donnée de (t-jD$_s$), on distingue trois cas:

- si t-jD$_s$ < - Δ, soit t < jD$_s$ - Δ, la fonction Ψ est nulle;
- si t-jD$_s$ > T$_s$, soit t > jD$_s$ + T$_s$, la fonction Ψ est nulle;
- dans l'intervalle entre les deux, la fonction Ψ est donnée par l'expression (6).

Les fréquences sont donc codées indépendamment à l'aide d'un code à quatre états de phase, définis par "l'alphabet" autorisé pour les coefficients complexes C$_{j,k}$, selon la relation (5).

Comme illustré sur la figure 1, ces fréquences sont émises sur la durée D$_s$ = Δ + T$_s$. Elles sont cependant orthogonales sur la durée T$_s$ L'intervalle de temps de durée Δ est l'intervalle de garde, destiné à atténuer les problèmes de corrélation inter-symboles liés au canal de propagation (trajets multiples notamment, susceptibles d'apparaître dans les zones hachurées de la figure 1). La durée d'analyse pour le décodage (en radiocommunications) des signaux reçus est ainsi limitée à T$_s$.

La modulation COFDM utilise un peigne de porteuses équidistantes. Elles sont orthogonales, pour un produit scalaire correspondant à leur fonction d'intercorrélation, calculée pendant l'inverse de leur espacement fréquentiel.

Chacune de ces porteuses porte, pendant une durée D$_s$, un symbole correspondant à un état de phase (ou, plus généralement, de modulation), choisi par exemple parmi Q=4 états. Cette durée D$_s$ correspond précisément à l'inverse T$_s$ de l'espacement de peigne, augmenté de l'intervalle de garde Δ. Et la durée de l'intervalle de garde Δ est choisie comme un majorant de la réponse impulsionnelle du canal de transmission.

Après chaque intervalle de temps correspondant à cette durée D$_s$, dite "ligne", on renouvelle le symbole à transmettre, et ceci un certain nombre de fois pour organiser une "trame".

En tête de trame, et pendant une durée choisie, on transmet, sur chaque sous-porteuse, le symbole correspondant à la phase nulle, de manière à permettre l'acquisition ou identification de la réponse fréquentielle du canal de transmission.

Sont émis de plus, en début de trame, un certain nombre de signaux de synchronisation. Ils permettent de restituer, à la réception, la fréquence porteuse, la durée de ligne, l'identification de l'émetteur, d'organiser les phases de calibration pour déterminer la réponse impulsionnelle pour chaque porteuse, ainsi que de repérer l'instant de début de la durée utile d'émission d'un symbole ou de déterminer la durée de l'intervalle de garde.

Le récepteur d'un tel signal en radiocommunications est ici considéré comme connu.

On ne reviendra pas dans la suite sur le découpage en trames. En effet, il intervient essentiellement dans les étages de réception de tête, qui sont considérés comme connus. Toutefois, il est nécessaire de faire en sorte que les traitements associés, notamment pour la calibration et le début de ligne, sont fiables à la précision requise pour les traitements radar proposés.

Il est séduisant d'utiliser des émissions hertziennes terrestres en mode radar bi-statique: coût faible côté émission, puisque les émetteurs préexistent, avec des fréquences déjà allouées; fréquences d'émission basses, avantageuses pour détecter des mobiles discrets (intrusion de petits aéronefs par exemple), et peu propices au neutrodynage actif (entre autres simulations), ainsi qu'au guidage de mobiles agressifs; fonctionnement permanent assuré en principe.

En technique radar, la détection bi-statique est décrite notamment dans "Multi-(bi)-static High Frequency (PO/GO) Radar Target Imaging of Airborne Scatterers" de S.K. CHAUDHU-RI et W.M. BOERNER, AGARD, CP 381, 1985.

L'interaction entre les émissions terrestres et les aéronefs est également étudiée dans l'article "Interference To Satellite Earth Stations Due To Scatter of Terrestrial Transmissions by Aircraft", J.V. MURPHY, Australian Telecommunications Review, Vol. 17, No. 1, 1983.

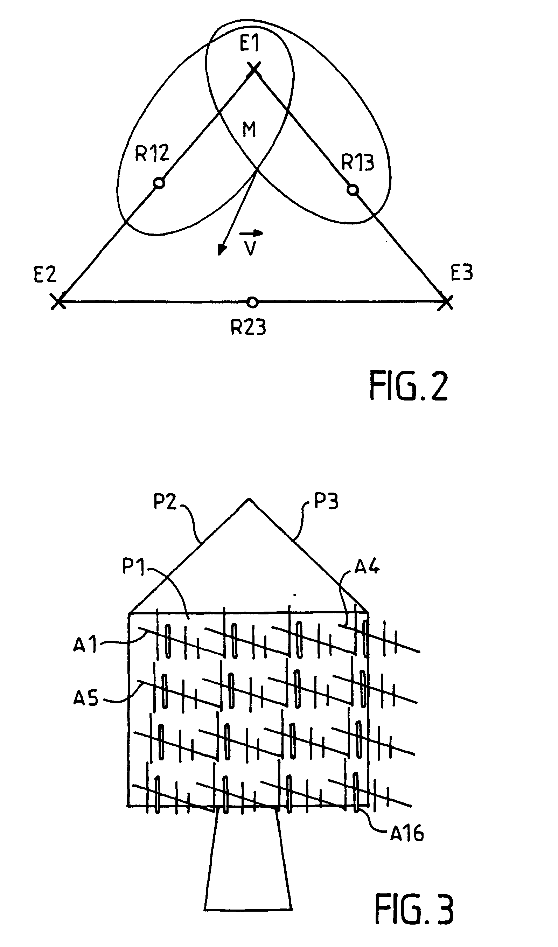

Le principe de la détection bi-statique est illustré sur la figure 2. on considère trois émetteurs hertziens terrestres E1 à E3, dans la configuration idéale ou "canonique" (en théorie) en triangle équilatéral. Trois récepteurs sont prévus : R12 sensiblement au milieu du segment joignant E1 et E2, R23 sensiblement au milieu du segment joignant E2 et E3, et R13 sensiblement au milieu du segment joignant E1 et E3.

Un mobile M (au moins) se déplace avec un vecteur vitesse $\vec{v}$. La coopération de chaque récepteur avec l'un des émetteurs permet tout d'abord d'acquérir des informations sur la vitesse relative du mobile (informations Doppler). En ce qui concerne la position, elle permet également, sous certaines réserves, de déterminer un ellipsoïde sur laquelle se trouve le mobile M, ellipsoïde dont les foyers sont l'émetteur et le récepteur associés.

La possibilité d'effectuer des mesures Doppler (de type radar bi-statique) à partir d'émetteurs hertziens terrestres de télédiffusion est connue depuis longtemps.

Par contre, des raisons techniques liées aux modulations utilisées rendent extrêmement difficile la mesure de distance avec les émetteurs hertziens terrestres analogiques d'aujourd'hui. Ces raisons sont multiples et tiennent au fait par exemple que la fréquence ligne télévision introduit les ambiguïtés de distance nombreuses et que la bande de fréquence utile dans le signal luminance est étroite. La capacité de détection de mobiles à faible signature et faible vitesse en présence de niveau de fouillis très important est ainsi rendue problématique.

L'émergence de la modulation COFDM, utilisée dans les bandes UHF ou VHF, a ravivé l'intérêt de certains radaristes pour la détection bi-statique à partir d'émetteurs hertziens.

En ce qui concerne les mesures Doppler, l'aspect multi-porteuse des signaux numériques COFDM tend plutôt à compliquer la situation: l'effet Doppler résultant est à rapporter à une pluralité de fréquences porteuses de valeurs différentes, et modulées indépendamment les unes des autres.

Il en est différemment pour les mesures "distance". En effet, par ses émissions faites à des instants précis (trame), le procédé COFDM apporte un élément intéressant, combiné à la connaissance de la nature de "l'alphabet" des codes de base: la forme d'onde d'émission est beaucoup moins sujette à variation que dans le cas de la télédiffusion analogique, même si pour un observateur non averti elle apparaît comme un bruit. Il est en effet possible, en décodant l'émission directe reçue dans les récepteurs, de reconnaître le signal émis (c'est-à-dire de décoder les symboles), bien que ce signal émis soit modulé par une source inconnue.

Cette considération permet d'effectuer sur les signaux bi-statiques à exploiter une démodulation avant traitement qui ramène au cas d'une émission qui ne serait pas modulée par l'équivalent d'un bruit.

L'un des fondements de la présente invention est l'observation que la fonction d'ambiguïté du signal ainsi traité se rapproche des besoins habituels des radaristes.

En effet, il a été observé que l'utilisation d'un code constitué d'un grand nombre de fréquences orthogonales pendant la durée de symbole conduit à un signal large bande à spectre blanc. Ceci confère au système de détection bi-statique un pouvoir de discrimination en distance intéressant, et une robustesse exemplaire vis-à-vis des interférences et trajets multiples.

Ceci étant, il reste les difficultés suivantes :

- pour que les ellipsoïdes de la figure 2 soient fixes dans l'espace, il est nécessaire que chaque récepteur soit capable d'acquérir une information de synchronisation, vis-à-vis de l'émission de l'émetteur considéré. Cet aspect particulièrement délicat est développé ci-après.

- l'hypothèse de travail selon laquelle le signal serait périodique (de période égale à l'inverse de l'écart entre deux fréquences voisines) ne peut être retenue. En effet, les coefficients $C_k$ doivent nécessairement changer d'un symbole à un autre. A défaut, le signal hertzien ne véhiculerait pas d'information : il est impossible de transmettre une information, à partir de signaux émis qui resteraient parfaitement aléatoires à moyen terme, ce qui est requis pour l'hypothèse de périodicité.

- en revanche, il est vrai que le signal COFDM est semblable à un bruit temporel. Ceci empêche de lui appliquer les traitements radar classiques, où l'on considère "en parallèle" (séparément et indépendamment), la discrimination distance et la discrimination Doppler.

- enfin, il y a lieu d'éliminer les échos fixes, ce qui pose aussi problème, compte-tenu de la gamme dynamique à traiter (de l'ordre de 95 dB).

Quant au problème de la synchronisation, il est techniquement requis que tous les émetteurs soient synchronisés entre eux. Mais il n'en résulte pas pour autant qu'il est facile, au niveau du récepteur, d'acquérir la synchronisation voulue par rapport à ces différentes émissions. L'usage à cet effet d'horloges de haute précision est nécessaire, dès lors que l'on veut travailler sur des couples émetteur-récepteur. Il faut encore extraire un repère temporel précis du signal reçu.

C'est à ce niveau que la présente invention apporte un élément important, qui est de nature à permettre le développement de récepteurs capables de réaliser une détection efficace.

On considère une émission COFDM opérant autour de 300 MHz (fréquence porteuse nominale, indistincte des sous-porteuses), avec une puissance isotrope rayonnée équivalente de 1000 W. Les porteuses (sous-porteuses) sont au nombre $Np = 1500$, et couvrent une bande de 1,5 MHz. Elles sont donc équidistantes à 1kHz les unes des autres. La durée utile des symboles est de 1 ms.

Une des idées de base de la présente invention réside en ce que le récepteur est muni d'une antenne réseau, illustrée très schématiquement sur la figure 3 sous la forme de trois panneaux P1 à P3, disposés en triangle équilatéral avec un axe de symétrie vertical, pour couvrir toutes les directions. Chaque panneau comprend par exemple 16 éléments d'antennes, $A_1$ à $A_{16}$, agencés en matrice 4 x 4, et illustrés ici sous la forme d'antennes YAGI. Tout autre aérien sensiblement isotrope en gisement, et possédant du gain en azimut, est convenable. Bien que les structures planes soient plus simples, il est estimé que des structures d'antenne possédant une symétrie de révolution d'axe vertical et un profil concave vers l'extérieur seraient préférables.

Pour simplifier, on ne considérera dans la suite que 8 éléments d'antenne.

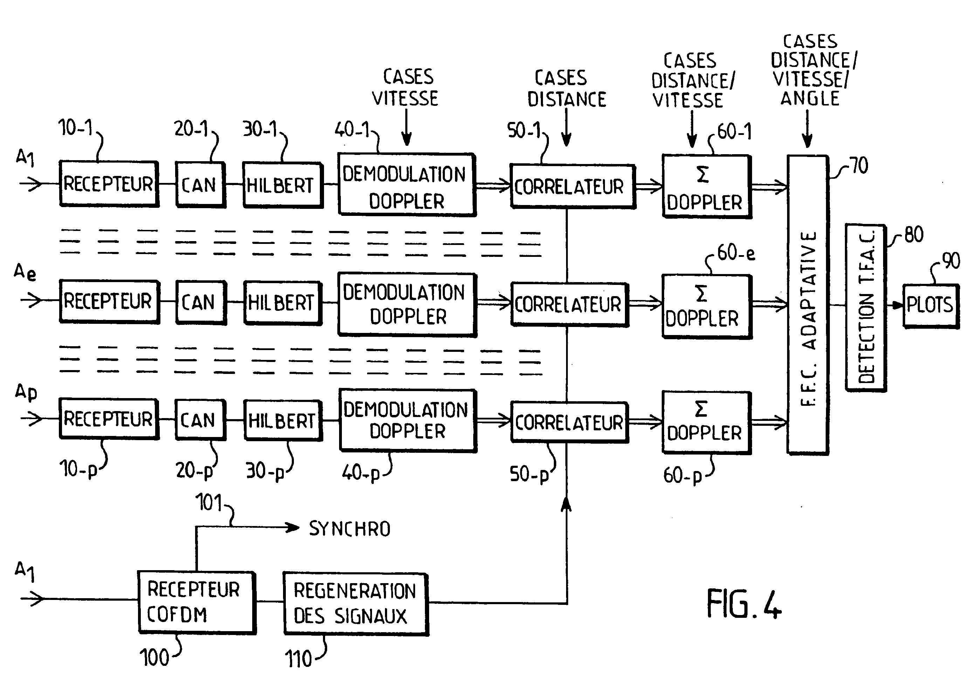

Le récepteur proprement dit est illustré sur la figure 4.

Selon un aspect important de l'invention, la sortie de l'une au moins des antennes (ici l'antenne A1) est reçue de manière classique, comme pour détecter les signaux de télédiffusion transmis.

L'étage de tête 100 est donc semblable à la partie radioélectrique d'un récepteur COFDM de type classique. Il possède une sortie 101 qui fournit le signal de synchronisation en temps, par rapport à l'émetteur considéré, par exemple le début de la période $T_s$ (figure 1). Cette synchronisation permet de définir la distance différentielle origine pour tous les échos issus de l'émission considérée, puisque le trajet direct est le plus court possible. Elle sert à l'unité 110 pour recréer la référence temporelle de l'étage de corrélation 50.

Les émetteurs eux-mêmes sont identifiés sans erreur par le trajet direct. On peut prendre comme référence des symboles dans un récepteur ceux qui correspondent par exemple à l'émetteur le plus proche, les symboles émis par les émetteurs étant par définition identiques, à un moment donné.

Ensuite, un étage 110 régénère les symboles diffusés, par application des traitements normalisés pour le système de diffusion considéré, par exemple la Norme ETSI pour les transmissions audio (Digital Audio Broadcasting ou DAB), ou la norme en cours d'élaboration pour les transmission vidéo (Digital Video Broadcasting ou DVB).

Les symboles sont régénérés dans un format adéquat pour être utilisés (sous forme complexe conjuguée) au niveau des corrélateurs 50 dont il sera question plus loin.

On considère maintenant les traitements radar.

Pour chacune des antennes $A_e$ (e va de 1 à P=8), le récepteur comprend une voie respective, que l'on décrira ci-après sans reprendre l'indice qui figure sur le dessin.

L'étage de tête est un récepteur radio-électrique 10, propre à recevoir la bande comprise entre environ 288 et 302 Mhz, avec des performances semblables à celles requises pour un récepteur de télédiffusion. De manière connue, ce récepteur comporte un ou des changements de fréquences, pour abaisser la bande de travail. On obtient en sortie un signal analogique qui représente les fréquences et phases de chacune des porteuses incluses dans l'ensemble de la bande reçue.

Ce signal de sortie comprend:

- un signal "direct", du à la propagation des ondes en ligne droite entre l'émetteur, par exemple E1 et le récepteur, par exemple R12 (à quoi s'ajoutent des trajets multiples éventuels), et
- pour au moins un objet rétro-diffusant M (supposé présent), un signal "utile" du à la rétrodiffusion des ondes de l'émetteur vers le récepteur par cet objet (à quoi s'ajoutent aussi des trajets multiples éventuels).

On sait que, vus côté réception, et pour un radar bi-statique en général :

- l'écart temporel entre le signal utile et le signal direct est, à une ambiguïté distance près, représentatif de la différence entre les distances (E1,M)+(M,R12) et (E1,R12), d'où les lieux de position en ellipsoïdes, et
- l'écart fréquentiel entre le signal utile et le signal direct est, à une ambiguïté vitesse près, représentatif de la somme algébrique des projections du vecteur vitesse $\vec{V}$ d'une part sur l'axe (M,E1), d'autre part sur l'axe (M,R12).

Après ce récepteur radio-électrique du type radar bi-statique, on passe en signaux numériques par un convertisseur analogique/numérique 20.

L'étage suivant 30 est un traitement de type transformée de HILBERT qui permet d'extraire les composantes complexes amplitude et phase (ou partie réelle, partie imaginaire) des signaux reçus. On note $CDS_e$ le signal complexe à deux composantes obtenu pour l'élément d'antenne $A_e$.

La fréquence d'échantillonnage est adaptée à la bande totale du signal et au nombre d'échantillons nécessaire pour exploiter une Transformée de Fourier Rapide (T.F.R.) sur la durée $T_s$ d'intégration qui permettra l'extraction des symboles. Cette fréquence d'échantillonnage est, dans l'exemple choisi, de 2,048 MHz.

La suite du traitement s'effectue en considérant par exemple Nd = 500 cases distances. La bande de 1,5 MHz correspond à une distance de 100 m en mode radar, soit un domaine distance différentiel de 50 km. On notera que le domaine distance non ambigu théorique pour 1 ms est de l'ordre de 150 km (en différentiel), donc supérieur à la distance habituelle entre deux émetteurs hertziens terrestres.

De même, on considère un domaine vitesse de $\pm$ 500 m/s, avec Nv = 128 cases vitesse, pour une cadence de récurrence utile de 800 Hz et une bande de filtrage de 6,25 Hz.

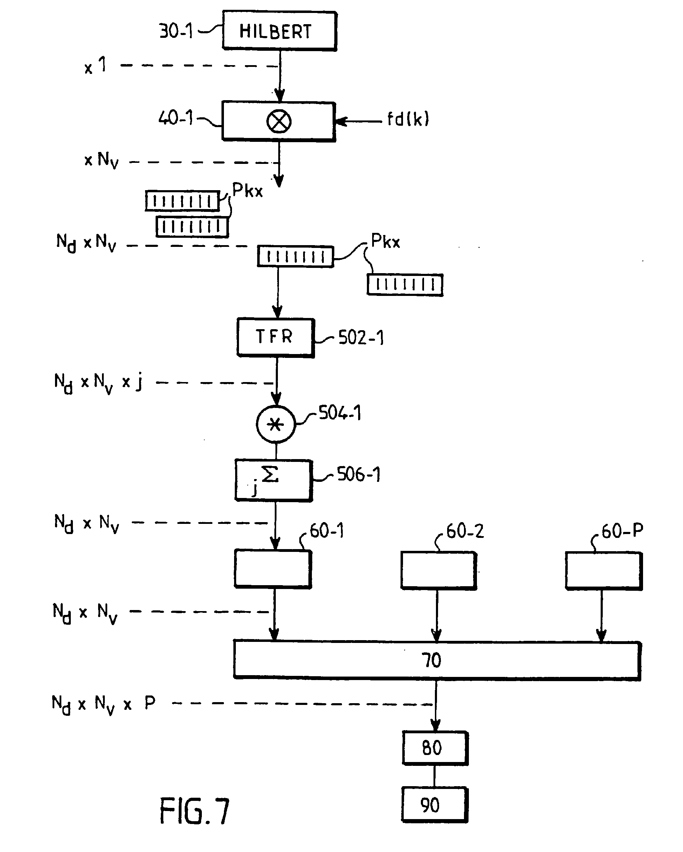

Pour la suite, on pourra se référer à la figure 7, afin de mieux percevoir l'arborescence (en nombre) des signaux traités.

Dans un étage 40, le signal $CDS_e$ fait l'objet d'une distribution Doppler, selon Nv cases vitesse (ou Doppler). De préférence, le pas entre les cases vitesse est adapté à la durée de l'intégration cohérente Doppler ultérieure.

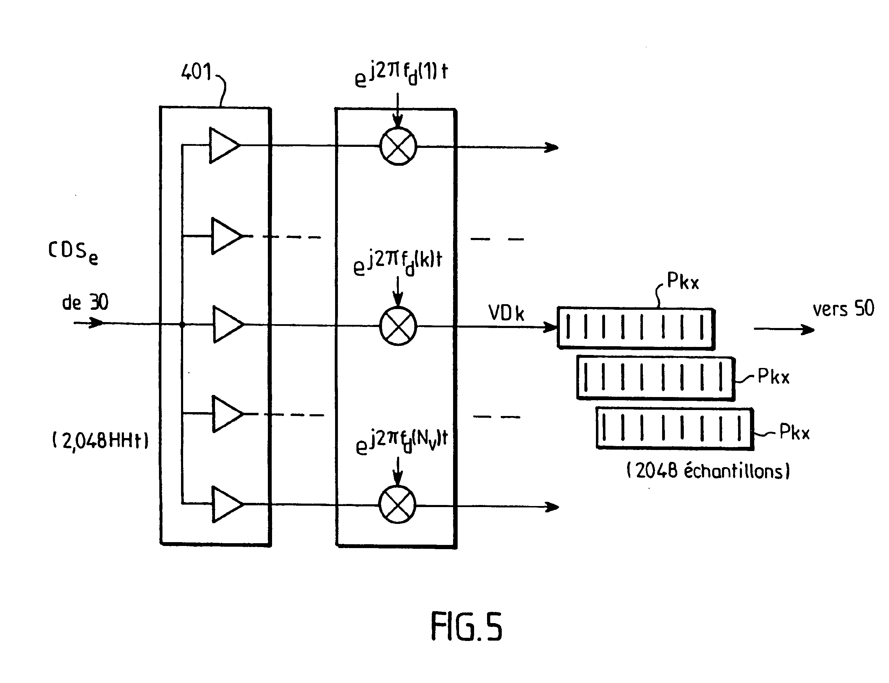

Détaillé sur la figure 5, l'étage 40 comprend un distributeur 401, capable de créer les Nv voies Doppler VDk requises (k va de 1 à Nv). Chaque voie Doppler VDk comporte un étage de changement de fréquence 403, pour abaisser la fréquence d'une valeur $f_d(k)$, qui est le décalage Doppler traité par cette voie. Un tel changement de fréquence comprend le produit du signal d'entrée par

$$\exp(j\ 2\ \pi\ f_d(k)\ t)$$

Grâce au filtrage de Hilbert préalable, cette multiplication fonctionne en bande latérale unique: soit un signal reçu RX incluant en fréquence un décalage Doppler RXd, qui va dans la voie Doppler $f_d(k)$ = FXd ; l'étage 403 ne fournit que la composante RXd - FXd, et non RXd + FXd.

Chaque multiplicateur 403 effectue donc une "démodulation Doppler". Mais celle-ci porte uniquement sur les écarts de fréquence dus à l'effet Doppler, dans les différentes cases Doppler définies. Elle laisse intact l'effet de la multiplicité de fréquences porteuses.

Ainsi, la pluralité Nv de cases vitesse s'analyse comme une batterie de changements de fréquence couvrant l'ensemble du domaine Doppler (ou domaine vitesse) à traiter.

Pour une voie Doppler VDk donnée, il sort du multiplicateur 403 un train de données temporelles complexes, qui portent au niveau de chaque symbole la modulation (inconnue) de la source, et ce pour un mobile qui aurait la vitesse correspondant au décalage Doppler $f_d(k)$ ce cette voie.

Ces trains de données temporelles sont regroupés par paquets $Pk_x$ de 2048 échantillons. Ces paquets sont "glissants": le paquet suivant est obtenu en enlevant le premier échantillon du paquet précédent, et en ajoutant un nouvel échantillon à la fin (le pas du glissement pourrait être supérieur à 1, au détriment de la précision attendue). Ceci va permettre ultérieurement la création des cases distance. Selon une technique classique en radar, il est possible d'augmenter (doubler ou plus) la vitesse d'échantillonnage, pour diminuer les pertes de recoupement entre cases distance.

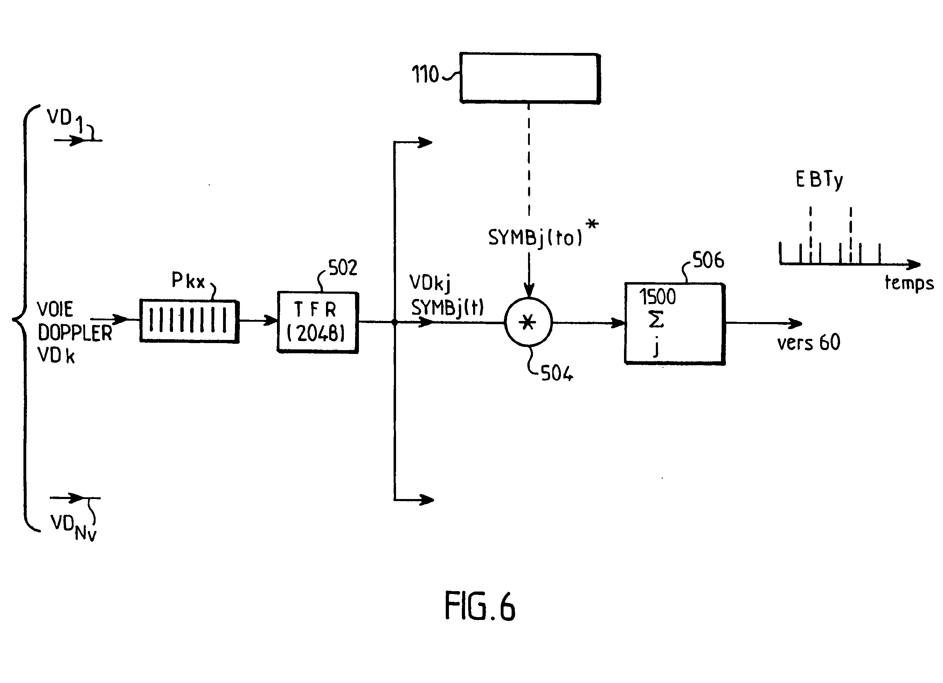

L'étage 50, détaillé sur la figure 6, applique à chaque paquet $Pk_x$ de 2048 échantillons successivement :

a) une opération 502 de Transformée de Fourier Rapide à 2048 points (la puissance de 2 immédiatement supérieure à 1500); chaque transformation de Fourier effectuée sur un paquet incident fournit en ses sorties la démodulation séparée des 1500 porteuses ; on isole ainsi les 1500 symboles (encore inconnus), sur des voies VDkj (quant aux voies Doppler, k varie de 1 à Nv=128; quant aux porteuses, j varie de 1 à Np=1500); une sortie de la TFR, pour une voie Doppler, contient donc un éventuel écho relatif à la porteuse considérée, pour un mobile qui aurait une vitesse incluse dans la plage Doppler de la voie Doppler considérée ; l'instant d'arrivée de cet écho est lié à l'information de distance recherchée ;

b) des opérations 504 de corrélation temporelle avec les symboles conjugués démodulés sur le trajet direct issu de l'unité 110 (figure 1), autant de fois qu'il y a de tels symboles, ici 1500 fois ; ceci va permettre la détermination de la ou des cases distance dans lesquelles se trouve un écho susceptible de correspondre à un mobile détecté ; un pic de corrélation apparaît en effet à l'instant de cet écho ; les cases distance sont donc directement définies par les instants des pics de corrélation ;

c) une opération 506 d'intégration ou sommation pondérée sur les 1500 symboles utiles, ce qui élabore les échantillons bruts EBTy de cases distance correspondantes, au rythme de 2,048 MHz (ou plus).

La sommation peut être pondérée en tenant compte notamment de la réponse fréquentielle mesurée sur le trajet direct.

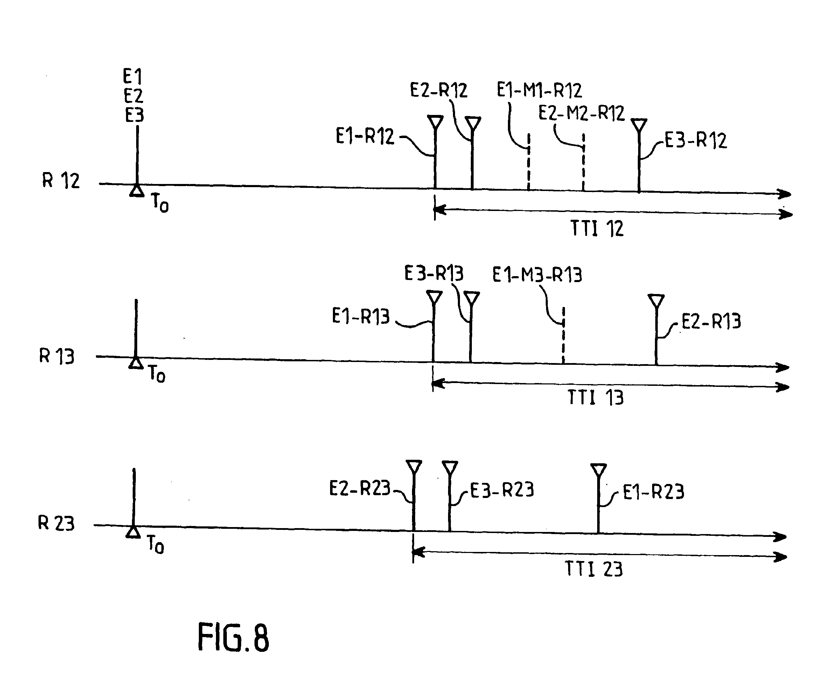

Les échantillons bruts EBTy sortent en correspondance des décalages de temps sur les trains de données glissantes à l'entrée. Leur séquencement correspond donc aux cases distance. La référence de temps est extraite du signal de synchronisation 101 issu de l'étage 100. L'allure des signaux peut être celle illustrée sur la Figure 8 (abstraction faite des cases Doppler).

En considérant globalement les opérateurs de TFR 502, ceux-ci effectuent une transformation de Fourier portant sur un multiple de Nd x Nv points, où Nd est le nombre de cases distance, et Nv le nombre de cases vitesse (Doppler).

A ce stade, les opérations 502 et 504 ont fait disparaître respectivement l'effet de la multiplicité des porteuses, et celui de leurs modulations respectives. Les signaux reçus, ont été ainsi, en quelque sorte, "alignés" à une même fréquence intermédiaire. Au moment où ils sont réunis par le sommateur 506, ils portent donc des informations Doppler cumulables, dans chaque voie Doppler.

L'intégration cohérente Doppler s'effectue ensuite dans des étages 60, par sommation d'échantillons temporels successifs EBTy (y de 1 à Nt), ramenés en coïncidence par des décalages temporels selon des multiples respectifs de y fois $D_s$, la durée de ligne.

La durée de l'intégration Doppler est par exemple de 160 ms. Ceci correspond à l'intégration de Nt = 128 échantillons temporels de symboles, qui se succèdent dans le temps pour chaque porteuse. Dans l'exemple choisi, il se trouve que le nombre de cases vitesse Nv = 128 et le nombre d'échantillon pris dans une intégration Doppler Nt - 128 sont égaux; on prendra soin de ne pas confondre ces deux notions.

On observera que les symboles varient d'une ligne à l'autre. Mais, après la compensation des écarts de fréquence entre porteuses, la corrélation par les symboles conjugués reçus (et, aussi, la sommation sur l'ensemble des symboles d'une même ligne), $D_s$ peut être considérée comme une période de récurrence effective. Par contre, dans les signaux électromagnétiques COFDM transmis, on ne peut pas identifier des instants précis qui marqueraient la périodicité des périodes de récurrence ainsi définies; en d'autres termes, il n'apparaît pas une véritable périodicité de durée $D_s$ dans les signaux émis.

Il faut noter que les opérateurs précédents ne sont pas permutables. Il y a lieu d'abord d'identifier les cases Doppler, avec les changements de fréquence requis, ensuite de procéder à la compression distance, et enfin de réaliser l'intégration Doppler cohérente.

En résumé, on prend le signal direct issu de l'un des émetteurs comme référence. Après prise en compte des composantes Doppler liées au mouvement d'un mobile qui rétrodiffuse les émissions du même émetteur, on obtient un signal temporel issu de la rétrodiffusion, comparable au signal direct. L'information d'écart temporel obtenue désigne un ellipsoïde sur lequel se trouve le mobile considéré.

Selon un autre aspect de la présente invention, un étage 70 reçoit les sorties de toutes les voies issues des différents éléments d'antenne. Cet étage réalise une formation de faisceaux adaptative par le calcul, qui permet donc d'identifier des "cases angulaires" dans lesquelles se trouvent les signaux correspondant effectivement à des mobiles, à partir de l'antenne réseau, en bénéficiant de la sélectivité angulaire que procure celle-ci.

L'ajout de ces cases angulaires permet de passer des ellipsoïdes (informations de distance seules) à des tronçons d'ellipsoïdes, délimités par les informations angulaires acquises. Toutefois, dans les cas où une détection bi-dimensionnelle suffirait (sans l'altitude), il serait possible de traiter l'intersection des ellipsoïdes avec une surface de référence: sol, géoïde, ou leurs dérivés.

La poursuite position/vitesse fournit aussi des indications essentielles pour mieux déterminer la position des mobiles sur ces ellipsoïdes ou tronçons d'ellipsoïdes.

Ainsi, l'étage 80 permet de réaliser un Traitement à Fausse Alarme Constante (TFAC), de principe connu, qui permet d'extraire des "plots" (données sur le ou les mobiles M) relativement au bruit ambiant.

Un étage 90 va ensuite permettre, par fusion des données multi-statiques, de lever d'éventuelles ambiguïtés correspondantes, de déterminer des plots effectifs où se trouvent les mobiles, cette fois sous la forme d'un repérage spatial absolu en distance et vitesse. En d'autres termes, chacun de ces plots pourra être associé à un vecteur d'état position/vitesse, qu'il est ensuite possible de pister ou poursuivre, de manière connue.

Ce lever d'ambiguïtés s'effectuera par association des plots bruts détectés et traitements de vraisemblance en position et en vitesse relative (dits "Multi Hypothesis Tracking", et/ou brevet publié FR-A-2 709 184). En effet, les émissions sont identiques. L'énergie par symbole est insuffisante pour que l'on puisse identifier l'émetteur à partir des signaux diffractés par les mobiles. Les plots détectés sont donc a priori indifférenciés dans les récepteurs du point de vue de l'émetteur origine.

La distinction entre les émetteurs sources des plots radar s'effectue donc pour une part en utilisant la directivité du réseau d'antennes de réception, pour l'autre part d'après les décalages temporels et Doppler des signaux diffractés par les mobiles, que l'on pourra pister.

La directivité de l'antenne-réseau est naturellement appréciée en tenant compte de sa forme.

Ainsi, un traitement d'association temporel ordonné (par exemple par écart temporel croissant par rapport au trajet direct d'un émetteur donné dans un récepteur donné), incluant les dernières hypothèses de position, et la vraisemblance associée des mesures de vitesse relative, permet une levée d'ambiguïté et l'accès à des "plots extraits".

La figure 8 explicite un exemple simplifié de succession des échos dans le temps, qui progresse de gauche à droite. Les trois lignes de cette figure 8 concernent, de haut en bas, les récepteurs R12, R13 et R23. Les signaux émis sont distingués en bas par un triangle pointe vers le haut; les trajets directs reçus sont distingués en haut par un triangle pointe vers le bas ; les échos (toutes cases Doppler confondues) sont distingués par un trait vertical brisé. On suppose, en $T_0$, une synchronisation parfaite des émetteurs (il suffirait que les écarts temporels des émetteurs par rapport à cette synchronisation parfaite soient connus).

Chaque récepteur, sachant où il se trouve, identifie sans erreur les réceptions sur trajet direct.

R12 reçoit d'abord le trajet direct E1-R12 de l'émetteur E1, puis celui E2-R12 de E2; suivent un premier écho R12(u,1) du à l'action Eu-M(1)-R12 d'un émetteur sur un mobile M(1), et un second écho R12(v,2) de la forme Ev-M(2)-R12 ; vient enfin le trajet direct E3-R12.

R13 reçoit d'abord les trajets directs E1-R13, puis E3-R13 ; suit un écho R13(w,3) de la forme Ew-M(3)-R13 ; vient enfin le trajet direct E2-R13.

R23 reçoit les trajets directs E2-R23, puis E3-R23 et enfin E1-R23, mais aucun écho.

Pour chaque récepteur, la "tranche temporelle instrumentée" (TTI12,TTI13,TTI23) commence au premier trajet direct reçu, pour se terminer avec le dernier signal utile reçu (non représenté).

Le plus probable, temporellement, est que les échos R12ul et R12v2 soient dus respectivement aux émetteurs E1 et E2 (mais la connaissance des positions et mouvements passés de mobiles peut conduire à une autre situation). On a donc u=1 et v=2, comme indiqué a priori sur le dessin. Pour la même raison, w=1.

Le traitement d'association temporelle ordonnée va permettre ici d'identifier les mobiles M(1), M(2) et M(3) à un seul et même mobile M.

De préférence, ce traitement fait intervenir plusieurs récepteurs (R12,R23,R13) conjointement. Ils doivent donc communiquer par des liaisons appropriées entre eux et/ou avec une station centrale, qui rapproche les plots radar que fournissent ces récepteurs. Cela permet de passer des tronçons d'ellipsoïdes à l'intersection de ceux-ci qui donne une position. La station centrale peut se trouver au niveau de l'un des récepteurs.

Un ou plusieurs des récepteurs et/ou la station centrale peuvent adresser aux émetteurs de télédiffusion des informations de service, aux fins de re-transmission dans leur modulation (location de canaux dans le système de télédiffusion lui-même). Ces informations de service peuvent concerner les paramètres de travail du système, voire les résultats. Les informations sont alors disponibles en sortie du récepteur 110.

Une autre idée importante de la présente invention est le recours systématique à la détection multi-statique: la seule détection bi-statique peut induire des désensibilisations liées à des zones aveugles, en particulier en cas d'échos mobiles proches du fouillis de sol.

A cet effet, l'invention prévoit en outre que l'on ajoute, aux émetteurs hertziens existants de télédiffusion, des émetteurs additionnels semblables (modulation COFDM), mais qui peuvent être "dédiés" à la détection.

Ces émetteurs, synchronisés sur ceux du réseau de diffusion, n'introduiront de ce fait aucun type de brouillage, pourvu que leurs règles d'implantation soient les mêmes.

De tels émetteurs auxiliaires peuvent être implantés dans les zones d'ombre ou zones aveugles, ou bien là où le relief du terrain a conduit à admettre une desserte limitée en télédiffusion. Ils peuvent également être implantés là où la disposition géographique des émetteurs de télédiffusion s'écarte trop des configurations idéales pour la détection multi-statique, ou bien aux endroits où une meilleure précision est souhaitée. Ils peuvent encore être prévus sous forme d'unités mobiles, incluant émetteurs et récepteurs.

Le récepteur 100 peut avoir des parties communes avec le récepteur de voie 10-1 associé au même élément d'antenne. Il peut aussi travailler avec un aérien séparé, éventuellement rendu omni-directionnel.

Bien entendu, l'invention n'est pas limitée aux éléments décrits. En particulier, l'expression "télédiffusion" couvre non seulement les émissions de type télévision, mais aussi, plus généralement, toute forme de transmission d'informations à distance par voie radioélectrique.

ANNEXE - FORMULES

$$X(t) = \sum_{j=-\infty}^{+\infty} symb_j(t) \qquad\qquad (1)$$

$$symb_j(t) = \sum_{k=0}^{N-1} C_{j,k}\, \psi_{j,k}(t) \tag{2}$$

$$\psi_{j,k}(t) = g_k(t-jD_s) \tag{3}$$

$$\begin{cases} -\Delta \le t < T_s & g_k(t) = e^{2i\pi f_k t} \\ ailleurs & = 0 \end{cases} \tag{4}$$

$$C_{j,k} \in \{1+i,\ 1-i,\ -1+i,\ -1-i\} \tag{5}$$

$$\Psi_{j,k}(t) = g_k(t-jD_s) = e^{2i\pi f_k(t-jD_s)} \tag{6}$$

**Revendications**

1. Récepteur de détection d'objets mobiles, utilisant des émissions hertziennes terrestres de télédiffusion numérique, faites par des émetteurs qui opèrent communément sur la base d'une pluralité de porteuses de fréquences fixées, affectées d'une modulation numérique par symboles, traitée en multiplexage fréquentiel, orthogonal d'une porteuse à l'autre, ce récepteur comprenant:

   - des moyens de réception radioélectrique (10,20), pour capter les signaux rétro-diffusés par des objets sous l'effet desdits émetteurs hertziens,
   - des moyens de traitement (30,40,50,60) pour effectuer une discrimination de tels objets selon des cases distance/Doppler, et
   - des moyens auxiliaires (100, 101, 110) pour l'acquisition d'une référence de synchronisation par rapport aux émetteurs, afin de caler ces cases distance/Doppler dans le temps,

   **caractérisé en ce que** les moyens auxiliaires comprennent des moyens (100,101,110) pour recevoir et démoduler le signal direct hertzien de télédiffusion reçu de l'un au moins des émetteurs, afin d'en déterminer les instants de synchronisation et les symboles,
et **en ce que** les moyens de traitement comprennent:

- des moyens de distribution Doppler (401,403), propres à répartir les signaux reçus selon une pluralité de voies Doppler, en leur affectant dans chaque voie un décalage de fréquence associé au rang de cette voie Doppler,
- des moyens de compression en distance (50), propres à faire la somme (506), pour toutes les porteuses, des corrélations (502,504), sous des formes homologues, de la sortie de chaque voie Doppler avec les symboles disponibles en sortie des moyens auxiliaires, ce qui fournit des échantillons arrangés en cases distance/Doppler,
- des moyens (60) d'intégration Doppler cohérente sur un temps choisi, ce qui fournit des cases distance/ Doppler intégrées, et
- des moyens (80,90) de post-traitement avec poursuite, agencés pour rapprocher les échos obtenus dans ces cases, afin d'obtenir des plots radar contenant des informations de position/vitesse sur un ou des objets.

2. Récepteur selon la revendication 1, **caractérisé en ce que** le récepteur comporte, en sortie de son étage de réception radio électrique (10), un convertisseur analogique/numérique (20), suivi d'un étage (30) à transformée de HILBERT, pour obtenir des signaux numériques complexes amplitude/phase, et **en ce que** les moyens de distribution Doppler (401,403) et les étages suivants opèrent en numérique.

3. Récepteur selon la revendication 2, **caractérisé en ce que** les moyens de compression en distance (50) comprennent des étages de transformation de Fourier (502) sur des trains de données temporelles glissantes issues de la distribution Doppler, ce qui régénère les symboles tels que reçus, puis des corrélateurs temporels (504) de ceux-ci avec la sortie des moyens auxiliaires, et un sommateur (506) de la sortie des corrélateurs pour l'ensemble des porteuses.

4. Récepteur selon l'une des revendications 1 à 3, **caractérisé en ce que** les moyens de réception radioélectrique comprennent une antenne-réseau (A1-AP), **en ce que** les moyens de traitement (30,40,50) opèrent sélectivement sur des voies respectivement associées à des éléments d'antenne ou groupes d'éléments d'antenne distincts, jusqu'aux moyens de post-traitement, qui comprennent en tête des moyens (70) de recombinaison des sorties de ces voies, en vue d'une formation de faisceaux.

5. Récepteur selon l'une des revendications 1 à 4, **caractérisé en ce que** les moyens de recombinaison de faisceau opèrent de façon adaptative, en fonction des mobiles poursuivis et des échos observés.

6. Récepteur selon l'une des revendications 1 à 5, **caractérisé en ce que** les moyens de post-traitement comprennent des moyens de détection à taux de fausses alarmes constant (80).

7. Récepteur selon l'une des revendications 1 à 6, **caractérisé en ce que** les moyens de post-traitement comprennent un étage de traitement multi-statique (90), pour définir chaque plot radar à partir de plusieurs couples émetteur-récepteur.

8. Système de détection d'objets mobiles, **caractérisé en ce qu'**il comprend plusieurs récepteurs (R12,R23,R13) selon l'une des revendications précédentes, placés en des endroits choisis, et des moyens pour rapprocher les plots radar que fournissent ces récepteurs.

9. Système selon la revendication 8, **caractérisé en ce qu'**il comprend des moyens pour adresser aux émetteurs de télédiffusion des informations de service, aux fins de re-transmission dans leur modulation.

10. Système selon l'une des revendications 8 et 9, **caractérisé en ce qu'**en plus des émetteurs de télédiffusion proprement dits, il comprend des émetteurs additionnels placés en des endroits choisis et opérant avec la même modulation que les émetteurs de télédiffusion proprement dits.

**Claims**

1. Receiver for detecting mobile objects, using digital terrestrial RF telebroadcast transmissions made by transmitters which operate commonly on the basis of a plurality of fixed frequency carriers, assigned a symbol-based digital modulation, processed by frequency multiplexing, orthogonal from one carrier to another, this receiver comprising:

- radioelectric reception means (10, 20), for picking up the signals back-scattered by objects under the effect of the said RF transmitters,
- processing means (30, 40, 50, 60) for performing a discrimination of such objects according to distance/Doppler bins, and
- auxiliary means (100, 101, 110) for acquiring a synchronization reference with respect to the transmitters, so as to clamp these distance/Doppler bins over time,

**characterized in that** the auxiliary means comprise means (100, 101, 110) for receiving and demodulating the RF direct telebroadcast signal received from one at least of the transmitters, so as to determine the synchronization instants and the symbols thereof,
and **in that** the processing means comprise:

Doppler distribution means (401, 403), suitable for apportioning the signals received according to a plurality of Doppler pathways, by assigning them in each pathway a frequency shift associated with the rank of this Doppler pathway,
- distance compression means (50), suitable for forming the sum (506), for all the carriers, of the correlations (502, 504), in homologous forms, of the output of each Doppler pathway with the symbols available at the output of the auxiliary means, thereby providing samples arranged in distance/Doppler bins,
- means (60) for coherent Doppler integration over a chosen time, thereby providing integrated distance/Doppler bins, and
- means (80, 90) for post-processing with tracking, designed to reconcile the echoes obtained in these bins, so as to obtain radar blips containing position/speed information on one or more objects.

2. Receiver according to Claim 1, **characterized in that** the receiver comprises, at the output of its radioelectric reception stage (10), an analogue/digital converter (20), followed by a HILBERT transform stage (30), for obtaining amplitude/phase complex digital signals, and **in that** the Doppler distribution means (401, 403) and the following stages operate in digital.

3. Receiver according to Claim 2, **characterized in that** the distance compression means (50) comprise stages (502) for Fourier transformation on trains of sliding temporal data arising from the Doppler distribution, thereby regenerating the symbols as received, then temporal correlators (504) of the latter with the output of the auxiliary means, and a summator (506) of the output of the correlators for the set of carriers.

4. Receiver according to one of Claims 1 to 3, **characterized in that** the radioelectric reception means comprise an array antenna (A1-AP), **in that** the processing means (30, 40, 50) operate selectively on pathways respectively associated with antenna elements or groups of antenna elements that are distinct, as far as the post-processing means, which comprise, at the head end, means (70) for recombining the outputs of these pathways, with a view to beamforming.

5. Receiver according to one of Claims 1 to 4, **characterized in that** the beam recombining means operate in an adaptive manner, as a function of the mobile objects tracked and of the echoes observed.

6. Receiver according to one of Claims 1 to 5, **characterized in that** the post-processing means comprise detection means with constant false alarm rate (80).

7. Receiver according to one of Claims 1 to 6, **characterized in that** the post-processing means comprise a multi-static processing stage (90), for defining each radar blip on the basis of several transmitter-receiver pairs.

8. System for detecting mobile objects, **characterized in that** it comprises several receivers (R12,R23,R13) according to one of the preceding claims, placed at chosen locations, and means for reconciling the radar blips provided by these receivers.

9. System according to Claim 8, **characterized in that** it comprises means for addressing service information to the telebroadcast transmitters, for the purposes of retransmission in their modulation.

10. System according to one of Claims 8 and 9, **characterized in that** in addition to the telebroadcast transmitters proper, it comprises additional transmitters placed at chosen locations and operating with the same modulation as the telebroadcast transmitters proper.

**Patentansprüche**

1. Empfänger zum Erfassen mobiler Objekte, der Landfunksendungen für digitalen Fernsehfunk verwendet, die von Sendern ausgeführt werden, die gewöhnlich auf der Basis mehrerer Trägerwellen mit feststehenden Frequenzen funktionieren, die eine digitale Modulation durch Symbole haben, die durch Frequenzmultiplexen orthogonal von einer Trägerwelle zur anderen verarbeitet wird, wobei dieser Empfänger Folgendes aufweist:

   - Mittel zum radioelektrischen Empfang (10, 20), zum Fangen der von Objekten unter der Einwirkung der Funksender rückgestreuten Signale,
   - Verarbeitungsmittel (30, 40, 50, 60) zum Ausführen einer Unterscheidung solcher Objekte gemäß Entfernungs-/Doppler-Fächern und
   - Hilfsmittel (100, 101, 110) zum Erfassen einer Synchronisationsreferenz bezüglich Sendern, um diese Entfernungs-/Doppler-Fächer zeitlich abzustimmen,

   **dadurch gekennzeichnet, dass** die Hilfsmittel Mittel (100, 101, 110) aufweisen, um das direkte Fernsehlandfunksignal, das von mindestens einem der Sender empfangen wird, zu empfangen und zu demodulieren, um seine Synchronisationsaugenblicke und die Symbole zu bestimmen,
   und dass die Verarbeitungsmittel Folgendes aufweisen:

   - Doppler-Verteilungsmittel (401, 403), die die empfangenen Signale gemäß mehreren Doppler-Kanälen aufteilen können, indem sie ihnen in jedem Kanal einen Frequenzversatz zuweisen, der dem Rang dieses Doppler-Kanals zugeordnet ist,
   - Entfernungskompressionsmittel (50), die die Summe (506) aller Trägerwellen, der Korrelationen (502, 504) in homologen Formen von dem Ausgang jedes Doppler-Kanals mit den am Ausgang der Hilfsmittel verfügbaren Symbolen bilden können, was in Entfernungs-/Doppler-Fächern geordnete Abtastwerte ergibt,
   - Mittel (60) zur kohärenten Doppler-Integration auf einer ausgewählten Zeit, was integrierte Entfernungs-/Doppler-Fächer liefert, und
   - Nachverarbeitungsmittel (80, 90) mit Nachführung, die eingerichtet sind, um die Echos zu vergleichen, die in diesen Fächern erzielt werden, um Radar-Plots zu erzielen, die Positions-/Geschwindigkeitsinformationen zu einem Objekt oder zu Objekten enthalten.

2. Empfänger nach Anspruch 1, **dadurch gekennzeichnet, dass** der Empfänger am Ausgang seiner radioelektrischen Empfangsstufe (10) einen Analog-/Digitalwandler (20) aufweist, auf den eine Stufe (30) mit HILBERT-Transformierter folgt, um komplexe digitale Amplituden-/Phasensignale zu erzielen, und dass die Doppler-Verteilungsmittel (401, 403) und die darauf folgenden Stufen digital funktionieren.

3. Empfänger nach Anspruch 2, **dadurch gekennzeichnet, dass** die Entfernungskompressionsmittel (50) Fourier-Transformiertenstufen (502) auf zeitlichen gleitenden Datenströmen aufweisen, die aus der Doppler-Verteilung hervorgehen, was die Symbole so wie sie empfangen wurden regeneriert, dann zeitliche Korrelatoren (504) dieser mit dem Ausgang der Hilfsmittel und einen Summierer (506) des Ausgangs der Korrelatoren für alle Trägerwellen.

4. Empfänger nach einem der Ansprüche 1 bis 3, **dadurch gekennzeichnet, dass** die radioelektrischen Empfangsmittel eine Richtantenne (A1-AP) aufweisen, dass die Verarbeitungsmittel (30, 40, 50) selektiv auf Kanälen funktionieren, die jeweils Antennenelementen oder getrennten Gruppen von Antennenelementen zugewiesen sind, bis zu den Nachverarbeitungsmitteln, die zuerst Rekombinationsmittel (70) der Ausgänge dieser Kanäle zum Bilden von Strahlen aufweisen.

5. Empfänger nach einem der Ansprüche 1 bis 4, **dadurch gekennzeichnet, dass** die Strahlenrekombinationsmittel anpassend in Abhängigkeit von den verfolgten mobilen Elementen und beobachteten Echos funktionieren.

6. Empfänger nach einem der Ansprüche 1 bis 5, **dadurch gekennzeichnet, dass** die Nachverarbeitungsmittel Mittel zum Erfassen mit konstantem Satz von Fehlalarmen (80) aufweisen.

7. Empfänger nach einem der Ansprüche 1 bis 6, **dadurch gekennzeichnet, dass** die Nachverarbeitungsmittel eine multistatische Verarbeitungsstufe (90) aufweisen, um jeden Radar-Plot ausgehend von mehreren Sender-Empfängerpaaren zu bestimmen.

8. System zum Erfassen beweglicher Objekte, **dadurch gekennzeichnet, dass** es mehrere Empfänger (R12, R23, R13) nach einem der vorhergehenden Ansprüche aufweist, die an ausgewählten Stellen platziert sind, sowie Mittel, um die Radar-Plots, die diese Empfänger liefern, zu vergleichen.

9. System nach Anspruch 8, **dadurch gekennzeichnet, dass** es Mittel aufweist, um an die Fernsehfunksender Dienstleistungsinformationen zu adressieren, um sie in ihrer Modulation weiter zu übertragen.

10. System nach Anspruch 8 oder 9, **dadurch gekennzeichnet, dass** es zu den eigentlichen Fernsehfunksendern zusätzliche Sender aufweist, die an ausgewählten Stellen platziert sind und mit der gleichen Modulation wie die eigentlichen Fernsehfunksender funktionieren.

$$\text{symb}_j$$
$$D_s$$
$$\Delta \qquad T_s$$

$$\sum_{k=0}^{N-1} C_{kj}e^{j2\pi kt/T_s}$$

$$\text{symb}_{j+1}$$
$$D_s$$
$$\Delta \qquad T_s$$

$$\sum_{k=0}^{N-1} C_{kj+1}e^{j2\pi kt/T_s}$$

FIG.1

FIG.2

FIG.3

FIG.4

CASES VITESSE

CASES DISTANCE

CASES DISTANCE/ VITESSE

CASES DISTANCE/ VITESSE/ ANGLE

A₁ → RECEPTEUR (10-1) → CAN (20-1) → HILBERT (30-1) → DEMODULATION DOPPLER (40-1) → CORRELATEUR (50-1) → Σ DOPPLER (60-1)

Aₑ → RECEPTEUR → CAN → HILBERT → DEMODULATION DOPPLER → CORRELATEUR → Σ DOPPLER (60-e)

Aₚ → RECEPTEUR (10-p) → CAN (20-p) → HILBERT (30-p) → DEMODULATION DOPPLER (40-p) → CORRELATEUR (50-p) → Σ DOPPLER (60-p)

F.F.C. ADAPTATIVE (70) → DETECTION T.F.A.C. (80) → PLOTS (90)

A₁ → RECEPTEUR COFDM (100) → REGENERATION DES SIGNAUX (110)

101 → SYNCHRO

EP 1 214 608 B1

FIG.5

EP 1 214 608 B1

VD$_1$

VD$_{Nv}$

VOIE
DOPPLER
VD k

110

SYMBj(to)$^*$

EBTy

temps

Pkx

502

TFR
(2048)

VDkj
SYMBj(t)

$*$

504

506

1500
$\sum_j$

vers 60

FIG.6

30-1 —| HILBERT |

x 1 — — — — — — — — — — —

40-1 —| ⊗ | ← fd(k)

x $N_v$ — — — — — — — — —

|‖‖‖‖‖| ⌒Pkx
|‖‖‖‖‖|

$N_d$ x $N_v$ — — — — |‖‖‖‖‖‖| ⌒Pkx

|‖‖‖‖‖‖|

| TFR | ⌒502-1

$N_d$ x $N_v$ x j — — — — — —

( ✳ ) ⌒504-1

| $\sum_j$ | ⌒506-1

$N_d$ x $N_v$ — — — — — —

| | ⌒60-1        | | ⌒60-2        | | ⌒60-P

$N_d$ x $N_v$ — — — — —

| 70 |

$N_d$ x $N_v$ x P — — — — — — —

| 80 |

| 90 |

FIG.7

E1
E2
E3

E2-R12        E1-M1-R12
                              E2-M2-R12
E1-R12                                              E3-R12

R 12 ─────△─────────────────────────────────────────────────→
          T₀
                        ├──────────────────────────────────→
                                    TTI 12

E3-R13        E1-M3-R13
E1-R13                                              E2-R13

R 13 ─────△─────────────────────────────────────────────────→
          T₀
                        ├──────────────────────────────────→
                                    TTI 13

E2-R23        E3-R23                      E1-R23

R 23 ─────△─────────────────────────────────────────────────→
          T₀
                        ├──────────────────────────────────→
                                    TTI 23

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0681190 A1

- FR 2709184 A

**Littérature non-brevet citée dans la description**

- **B. CARRARA ; P. TOURTIER ; M. PECOT.** Le radar muet. *Colloque Radar,* 1994
- **B. LE FLOCH ; R. HALBERT-LASSALLE ; D. CAS-TELAIN.** Digital Sound Broadcasting to Mobile Receivers. *IEEE Transactions on Consumer Electronics,* Août 1989, vol. 35 (3

- **DE S.K. CHAUDHU-RI ; W.M. BOERNER.** Multi-(bi)-static High Frequency (PO/GO) Radar Target Imaging of Airborne Scatterers. *AGARD,* 1985, 381
- **J.V. MURPHY.** Interference To Satellite Earth Stations Due To Scatter of Terrestrial Transmissions by Aircraft. *Australian Telecommunications Review,* 1983, vol. 17 (1